# EUROPEAN PATENT APPLICATION

(11) **EP 4 730 542 A1**
(43) Date of publication of application: **22.04.2026**
(21) Application number: 25195346.9
(22) Date of filing: 12.08.2025
(51) Int. Cl.: H01M 50/503

(54) **BATTERY MODULE AND BATTERY PACK INCLUDING SAME**

(30) Priority: 17.10.2024 KR 20240141825
(71) Applicant: SAMSUNG SDI CO., LTD., Yongin-si, Gyeonggi-do 17084 (KR)
(72) Inventor: CHO, Mansik, 17084 Yongin-si, Gyeonggi-do (KR); HYUN, Seungjoo, 17084 Yongin-si, Gyeonggi-do (KR); KIM, Hyunkook, 17084 Yongin-si, Gyeonggi-do (KR); CHAE, Minyoung, 17084 Yongin-si, Gyeonggi-do (KR)
(74) Representative: Gulde & Partner

(57) **Abstract**

A battery module and a battery pack including the same are disclosed. A battery module includes a battery group in which a plurality of battery cells is arranged; a bus bar unit to electrically connect battery cells of the plurality of battery cells to each other; a pair of end plates respectively arranged at opposite sides of the battery group in a direction in which the battery cells are arranged; and a holder including a side connected to a terminal of each of the battery cells and another side connected to the end plate, and the holder covers at least one of the battery cells, has a first side bent, and covers an area of a battery cell of the plurality of battery cells that comes into contact with the end plate.

## Description

### BACKGROUND

### 1. Field

Aspects of embodiments of the present disclosure relate to a battery module and a battery pack including the same.

### 2. Description of the Related Art

Secondary batteries are batteries capable of charging and discharging, unlike a primary battery that is incapable of charging.

A low-capacity secondary battery may be used in portable small electronic devices, such as smartphones, feature phones, laptop computers, digital cameras, and camcorders. A high-capacity secondary battery is widely used as a power source for motor driving of hybrid vehicles and electric vehicles, and as a battery for power storage, for example.

Battery cells may repeatedly expand and contract according to operation of the secondary battery. Various methods are being devised to improve durability of the secondary battery.

The above-described information disclosed in the background art of the present disclosure is provided only to enhance understanding of the background of the present disclosure. The above-described information may include information which does not form the prior art.

### SUMMARY

According to an aspect of embodiments of the present disclosure, a battery module and a battery pack including the same are provided in which rupture of a battery cell structure due to expansion and contraction of a battery cell may be prevented.

However, aspects and technical problems to be solved by the present disclosure are not limited to the above-described aspects and problems to be solved. Other aspects and problems to be solved not described may be clearly understood by those skilled in the art from the following description of the disclosure.

According to one or more embodiments of the present disclosure, a battery module includes a battery group in which a plurality of battery cells is arranged; a bus bar unit to electrically connect battery cells of the plurality of battery cells to each other; a pair of end plates respectively arranged at opposite sides of the battery group in a direction in which the battery cells are arranged; and a holder including a side connected to a terminal of each of the battery cells and another side connected to the end plate, and the holder covers at least one of the battery cells, has a first side bent, and covers an area of a battery cell of the plurality of battery cells that comes into contact with the end plate. By providing a holder with one side connected to the battery cell terminal and another to the end plate, and by having a bent section covering the contact area between the battery cell and end plate, the battery module structurally reinforces the cell stack against swelling. This configuration effectively prevents displacement of the end plates and mechanical rupture between the cell case and cap plate by distributing swelling-induced pressure through the holder, thereby enhancing the structural integrity of the module during charging cycles.

In one or more embodiments, the holder includes a terminal body including a conductive material and having a side connected to the terminal of each of the battery cells, and a terminal housing which has a hollow interior space, is configured to accommodate the terminal body, and has a side coupled to the end plate. The use of a terminal body composed of conductive material and housed in a terminal housing with a dedicated coupling section to the end plate enables both mechanical fixation and secure electrical connection. This ensures stable current conduction while simultaneously maintaining the positional stability of the end plate, thereby minimizing the risk of rupture at the terminal-cap interface due to mechanical fatigue.

In one or more embodiments, the terminal housing includes a seating groove having a shape of a recess such that an external connection terminal is seatable therein. The inclusion of a seating groove in the terminal housing allows precise and stable positioning of an external connection terminal. This contributes to improved electrical connection reliability, prevents terminal misalignment during assembly or operation, and reduces the risk of mechanical stress or disconnection that could otherwise result from vibration or swelling.

In one or more embodiments, the battery module further includes a locking groove having a depth (e.g., a preset depth) on an inner peripheral surface of the end plate, and a locking protrusion configured to be caught by and coupled to the locking groove and protruding on a side of the terminal housing which is insertable in the end plate. The presence of a locking groove on the end plate and a corresponding locking protrusion on the terminal housing provides a robust mechanical interlock. This feature enhances the retention of the terminal housing within the end plate, ensuring that the battery cell stack remains tightly compressed and supported against swelling-induced deformation, which in turn reduces structural fatigue.

In one or more embodiments, the terminal body includes the side connected to the terminal of each of the battery cells and another side connected to an external connection terminal arranged on the end plate. Connecting the terminal body to both the battery cell terminal and the external connection terminal arranged on the end plate ensures a direct and compact electrical pathway. This minimizes electrical resistance and layout complexity while also improving thermal dissipation and mechanical stability at the terminal connection points.

In one or more embodiments, the terminal body connects respective terminals of different battery cells to each other. Allowing the terminal body to connect terminals of different battery cells facilitates simplified electrical interconnection within the battery group. This not only reduces the number of required bus bars but also contributes to space efficiency and improved module compactness without compromising electrical performance.

In one or more embodiments, the holder includes a pair of holders, and the pair of the holders are respectively arranged facing each other at opposite sides along the direction in which the battery cells are arranged. The use of a pair of holders arranged on opposite ends of the battery group enables balanced structural support from both directions. This symmetric pressure distribution effectively counteracts the forces generated during cell swelling, helping to maintain the alignment and compression of the battery group and thereby improving long-term reliability.

In one or more embodiments, the holder is connected to the terminal of each of the battery cells through the bus bar unit. Integrating the holder with the bus bar unit enables efficient simultaneous mechanical and electrical connection. This reduces component count, simplifies assembly, and ensures that structural support and electrical conduction are achieved without requiring redundant interfaces.

In one or more embodiments, the battery module further includes a bus bar holder, and the bus bar holder covers an upper portion of the battery group and has a terminal hole through which the terminal of each of the battery cells passes, wherein the bus bar unit is coupled to the bus bar holder and comes into contact with the plurality of battery cells. Providing a bus bar holder that covers the top of the battery group and includes terminal holes allows the bus bar unit to make direct contact with cell terminals while being securely positioned. This not only improves electrical connectivity and safety but also protects the terminals from external mechanical impacts.

In one or more embodiments, the first side of the holder which is bent covers a corner area of the battery cell that comes into contact with the end plate. Having the bent first side of the holder cover the corner area of the battery cell at the end plate enhances protection at a critical structural junction. This design ensures that swelling forces are absorbed and redirected effectively, minimizing the risk of corner rupture or fatigue damage at the joint between the cell and the cap plate.

According to one or more embodiments of the disclosure, a battery pack includes a plurality of battery modules, and a battery pack housing which accommodates the plurality of battery modules therein, wherein a battery module of the plurality of battery modules includes a battery group in which a plurality of battery cells is arranged; a bus bar unit to electrically connect battery cells of the plurality of battery cells to each other; a pair of end plates respectively arranged at opposite sides of the battery group in a direction in which the battery cells are arranged; and a holder including a side connected to a terminal of each of the battery cells and another side connected to the end plate, and the holder covers at least one of the battery cells, has a first side bent, and covers an area of a battery cell of the plurality of battery cells that comes into contact with the end plate. Incorporating the described battery module design into a battery pack with multiple modules housed in a battery pack housing allows modular scalability. Each module benefits from reinforced support against swelling, improving the overall mechanical robustness and operational safety of the full battery pack during high-capacity applications. The previous discolsure regarding the battery module also applies accordingly to the battery pack.

In one or more embodiments, the holder includes a terminal body including a conductive material and having a side connected to the terminal of each of the battery cells, and a terminal housing which has a hollow interior space, is configured to accommodate the terminal body, and has a side coupled to the end plate. Including a conductive terminal body housed in an insulative terminal housing that is connected to the end plate ensures secure and isolated electrical conduction paths within the battery pack. This dual-purpose feature aids in achieving compact yet durable modular designs suitable for integration into electric vehicle or energy storage systems.

In one or more embodiments, the terminal housing includes a seating groove having a shape of a recess such that an external connection terminal is seatable therein. The seating groove formed in the terminal housing enhances the alignment and mechanical stability of external connection terminals. This ensures durable and repeatable terminal integration, which is especially beneficial in high-vibration environments or where repeated electrical coupling is expected.

In one or more embodiments, the battery module further includes a locking groove having a depth (e.g., a preset depth) on an inner peripheral surface of the end plate, and a locking protrusion configured to be caught by and coupled to the locking groove and protruding on a side of the terminal housing which is insertable in the end plate. Incorporating a locking groove on the end plate and a corresponding locking protrusion on the terminal housing strengthens the attachment of the housing to the structural frame of the module. This prevents relative movement and loosening of the terminal assembly during cycling-induced swelling, improving structural longevity.

In one or more embodiments, the terminal body includes the side connected to the terminal of each of the battery cells and another side connected to an external connection terminal arranged on the end plate. Allowing the terminal body to connect both to the internal terminal of the battery cell and the external connection terminal facilitates compact, low-resistance routing of electrical pathways. This enhances electrical efficiency while maintaining the mechanical fixation needed to suppress swelling-induced displacement.

In one or more embodiments, the terminal body connects respective terminals of different battery cells to each other.

In one or more embodiments, the holder includes a pair of holders, and the pair of the holders are respectively arranged facing each other at opposite sides along the direction in which the battery cells are arranged.

In one or more embodiments, the holder is connected to the terminal of each of the battery cells through the bus bar unit.

In one or more embodiments, the battery module further includes a bus bar holder, and the bus bar holder covers an upper portion of the battery group and has a terminal hole through which the terminal of each of the battery cells passes, wherein the bus bar unit is coupled to the bus bar holder and comes into contact with the plurality of battery cells.

In one or more embodiments, the first side of the holder which is bent covers a corner area of the battery cell that comes into contact with the end plate.

### BRIEF DESCRIPTION OF THE DRAWINGS

The accompanying drawings illustrate some embodiments of the present disclosure and, together with the foregoing disclosure, serve to provide further understanding of the technical features of the present disclosure; however, the present disclosure is not to be construed as being limited to the drawings, in which:
FIG. 1 is a perspective view illustrating a battery pack including a battery module according to an embodiment of the present disclosure;
FIG. 2 is a perspective view illustrating the battery module of FIG. 1;
FIG. 3 is an exploded perspective view of the battery module of FIG. 2;
FIG. 4 is a perspective view illustrating a battery cell of FIG. 3, according to an embodiment;
FIG. 5 is an enlarged view of a region "A" of FIG. 2;
FIG. 6 is an enlarged view of a region "B" of FIG. 2;
FIG. 7 is a view illustrating a first holder part of FIG. 2;
FIG. 8 is an enlarged cross-sectional view of the first holder part taken along the line I-I' of FIG. 2;
FIG. 9 is a view illustrating a second holder part of FIG. 2; and
FIG. 10 is an enlarged cross-sectional view of the second holder part taken along the line I-I' of FIG. 2.

### DETAILED DESCRIPTION

Herein, one or more embodiments of the present disclosure will be described in further detail with reference to accompanying drawings. It is to be understood that the terms used in the specification and the appended claims are not to be construed as being limited to general and dictionary meanings, but interpreted based on the meanings and concepts corresponding to technical aspects of the present disclosure on the basis of the principle that the inventor is allowed to define terms appropriately for the best explanation. Therefore, the description provided herein is for the purpose of illustration, and not intended to limit the scope of the disclosure, such that it is to be understood that other equivalents and modifications could be made thereto without departing from the spirit and scope of the disclosure.

In addition, it is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

In addition, the accompanying drawings may not be shown according to the actual scale, so as to help understand the disclosure, and the dimensions of some components may be exaggerated. Further, the same element in different embodiments may be given the same reference numeral.

When it is described that two things being compared are "the same" they may be the same or substantially the same. Therefore, substantial equivalence may include deviations that are considered low in the art, for example, deviations of less than 5%. Additionally, uniformity of a parameter over a given region may imply uniformity from an average perspective.

Expressions including ordinal numbers, such as "first" and "second," indicate various elements, but the above expressions do not limit the elements. These terms are used to distinguish one element from another, and unless the context clearly indicates otherwise, a first element may be termed a second element.

As used herein, the singular forms are intended to include the plural forms as well, unless the context clearly indicates otherwise.

Any configuration being placed "on" or "below" a component or "above" or "below" a component may mean not only that any configuration is placed in contact with the upper surface or lower surface of said component, but also that one or more other configurations may be interposed between said component and any configuration placed on or below said component.

It is to be further understood that when an element is referred to as being "connected" or "coupled" to another element, the elements may be directly connected or coupled to each other, or one or more intervening elements may be present therebetween, or each element may be "connected" or "coupled" to each other through one or more other elements. It is to be understood that when an element is referred to as being "electrically coupled" to another element, the element may be directly electrically coupled to another element or one or more intervening elements may be present.

When reference is made throughout the specification to "A and/or B," this means A, B, or A and B, unless otherwise specified. That is, "and/or" includes all or any combination of the listed items. The wording "C to D" indicates at least C but not more and D, unless otherwise specified.

The terminology used herein is for the purpose of describing some embodiments of the present disclosure and is not intended to be limiting of the present disclosure.

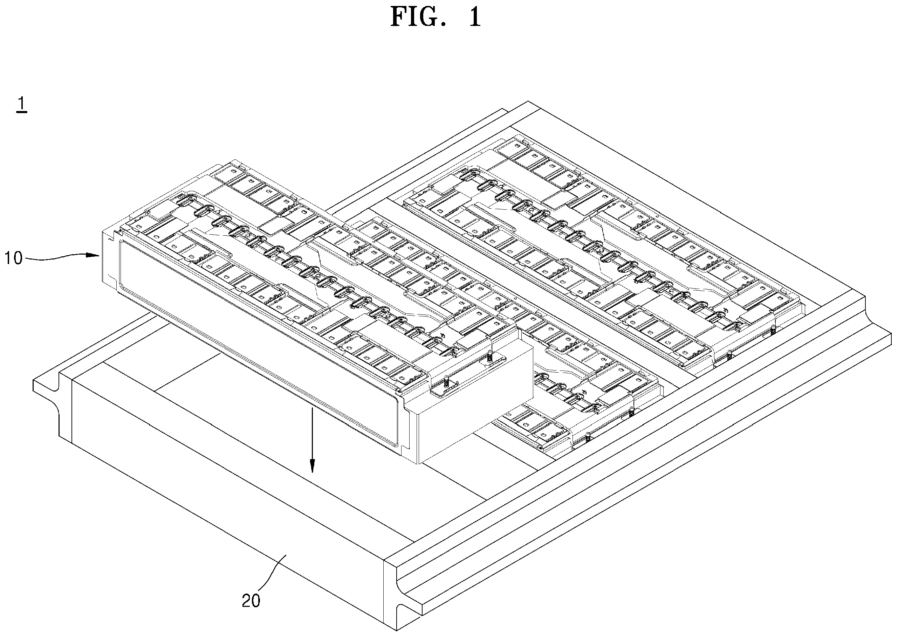

FIG. 1 is a perspective view illustrating a battery pack 1 including a battery module 10 according to an embodiment of the present disclosure.

Referring to FIG. 1, the battery pack 1 according to an embodiment of the present disclosure may include the battery module 10 and a battery pack housing 20.

The battery module 10 may transmit electrical energy charged inside to the outside. As described later, in the battery module 10, a plurality of battery cells 110 may be connected to each other and electrically connected to the outside, thereby transmitting electric energy charged inside to the outside.

The battery pack 1 may include a plurality of battery modules 10. In an embodiment, the plurality of battery modules 10 included in the battery pack 1 may be electrically connected to each other by a module bus bar (not shown) or the like, such that a larger amount of electrical energy may be transmitted to the outside.

Although FIG. 1 shows the battery pack 1 including three battery modules 10, the present disclosure is not limited thereto, and a number of battery modules 10 and a method of connection between the battery modules 10 may be appropriately selected as desired.

The battery pack housing 20 may provide a space for accommodating the battery modules 10 and may connect the battery modules 10 to each other or allow the battery modules 10 to transmit electrical energy to the outside.

The battery pack housing 20 may provide a space where the battery module 10 is seated, and may accommodate the battery module 10 inside the battery pack housing 20. For example, the battery pack housing 20 may include an accommodation space having a shape corresponding to an outer shape of the battery modules 10.

Thereby, in a case in which the battery modules 10 are accommodated in the battery pack 1, the battery modules 10 may be stably supported without shaking.

The battery pack housing 20 may electrically connect the plurality of battery modules 10 to each other. For example, the battery pack housing 20 may connect battery modules 10 in parallel or series with each other by using a module bus bar (not shown). Accordingly, the battery modules 10 may transmit more electrical energy to the outside.

The battery pack housing 20 may electrically connect the battery module 10 to the outside. For example, the battery pack housing 20 may electrically connect the battery modules 10 with an external component by using a connection terminal (not shown) that is connected to the outside.

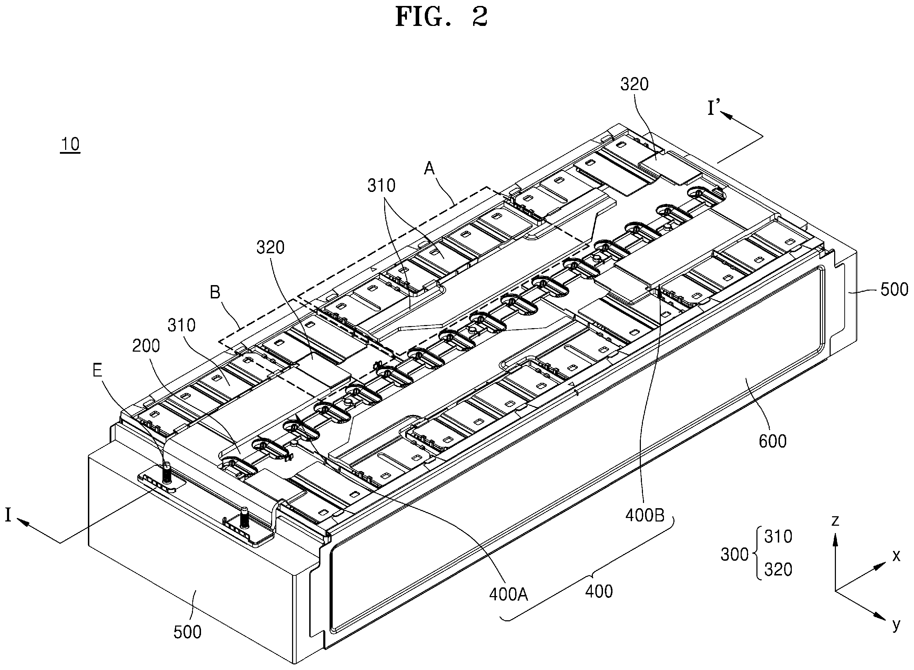

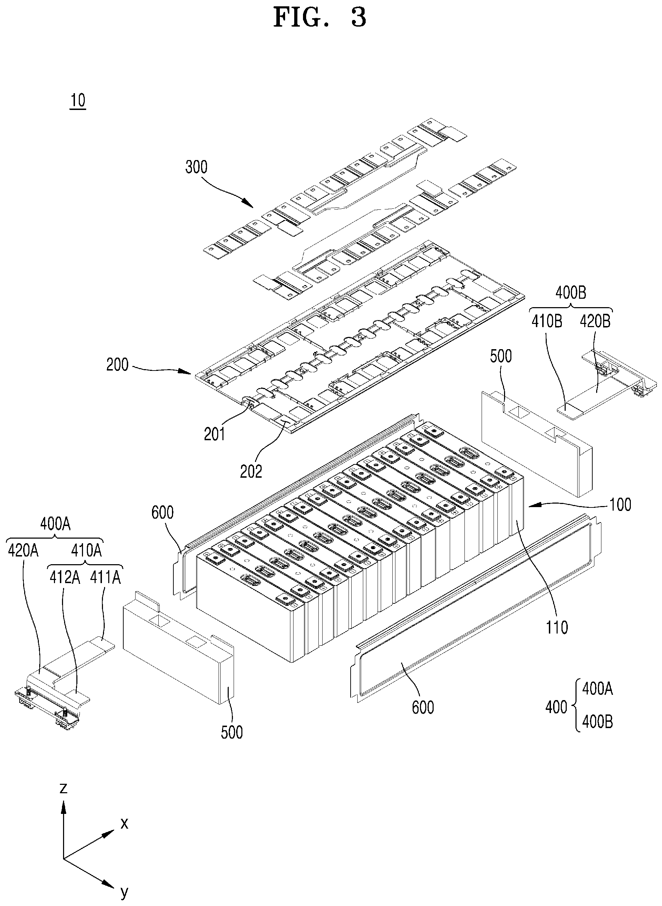

FIG. 2 is a perspective view illustrating the battery module 10 of FIG. 1; and FIG. 3 is an exploded perspective view of the battery module 10 of FIG. 2.

Referring to FIGS. 2 and 3, the battery module 10 according to an embodiment of the present disclosure may include a battery group 100, a bus bar holder 200, a bus bar unit 300, a holder part, or holder, 400, an end plate 500, and a side plate 600.

Referring to FIG. 3, the battery group 100 according to an embodiment of the present disclosure may be formed by arranging a plurality of battery cells 110.

In an embodiment, the battery group 100 may be formed by arranging the plurality of battery cells 110 in a thickness direction of the battery cells 110. For example, the battery group 100 may be arranged such that adjacent battery cells 110 are connected to each other in the thickness direction thereof.

Accordingly, a number of battery cells 110 accommodated in the battery modules 10 having a certain volume (e.g., a preset volume) may be increased, thereby increasing the energy density.

In addition, in case a force is applied toward the battery group 100 at opposite ends thereof in the direction in which the battery cells 110 are arranged, each of the battery cells 110 is pressed in the thickness direction of the battery cells 110, thereby preventing or substantially preventing an occurrence of a swelling phenomenon.

Although the drawings depict a battery group 100 in which sixteen battery cells 110 are arranged in one row, this is provided as an example, and a number and arrangement structure of the battery cells 110 may be appropriately selected as desired.

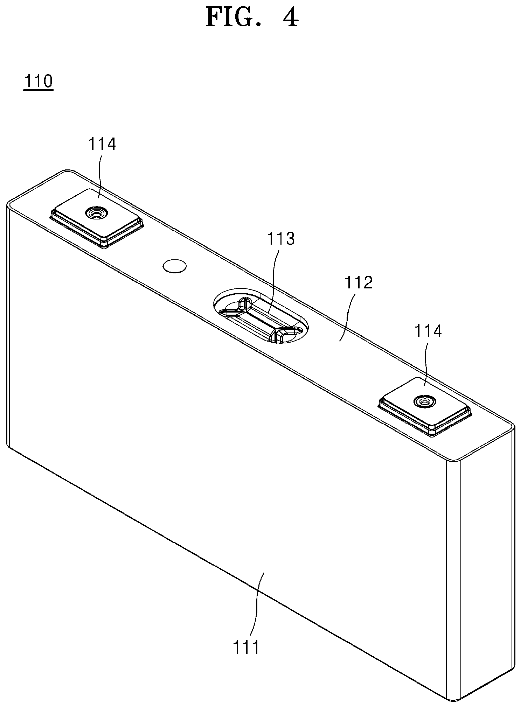

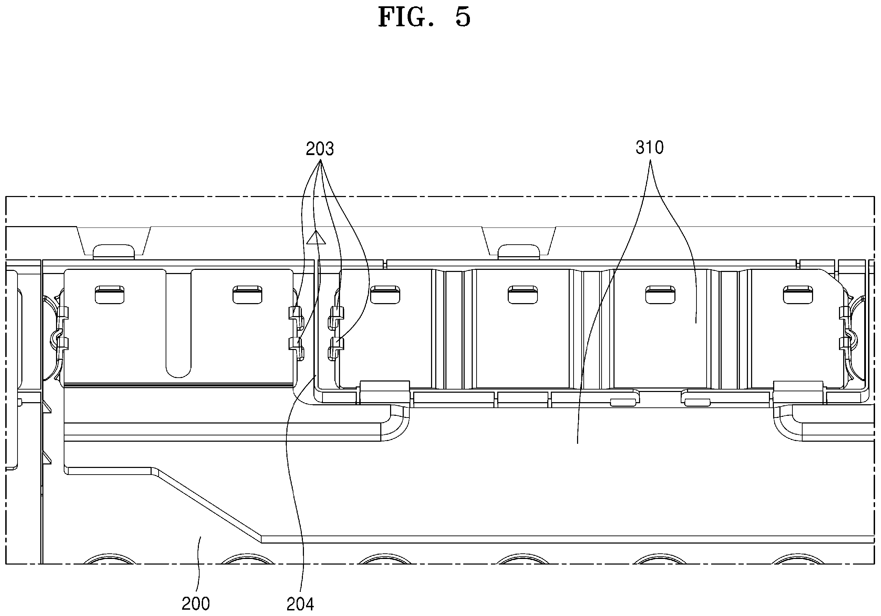

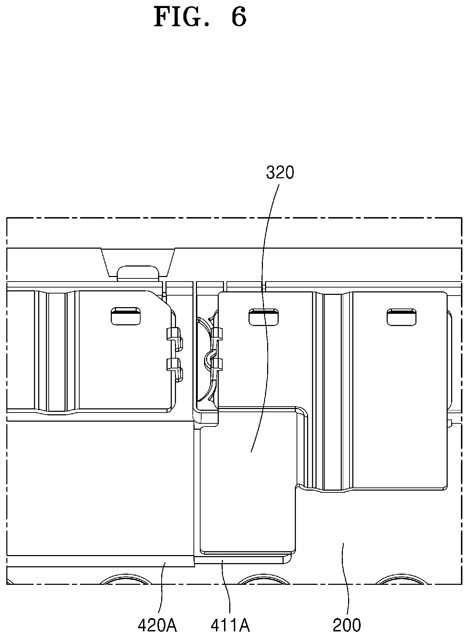

FIG. 4 is a perspective view showing the battery cell 110 of FIG. 3 according to an embodiment; FIG. 5 is an enlarged view of a region "A" of FIG. 2; and FIG. 6 is an enlarged view of a region "B" of FIG. 2.

Referring to FIG. 4, the battery cell 110 may include a case 111, a cap plate 112, a vent part 113, and a terminal 114 of the battery cell 110.

The case 111 may form an overall appearance of the battery cell 110 and may include a conductive metal, such as aluminum, an aluminum alloy, or nickel-plated steel. Additionally, the case 111 may provide a space in which an electrode assembly (not shown) is accommodated.

An opening may be formed on a side of the case 111, and an electrode assembly (not shown) and an electrolyte accommodated in the case 111 may be inserted into the inside of the case 111 through the opening.

The cap plate 112 may cover an opening formed in the case 111. Thus, the inside and outside of the case 111 may be spatially and fluidically separated from each other.

The vent part 113 may be arranged in a hole formed on a side of the cap plate 112 and may provide an exhaust passage for gas generated inside the battery cell 110.

The vent part 113 may be ruptured in a case in which a pressure inside the battery cell 110 exceeds a certain (e.g., preset) value, thereby forming a passage through which the gas inside may escape to the outside.

The terminal 114 of the battery cell 110 may be arranged on the cap plate 112. The terminal 114 of the battery cell 110 may be exposed to the outside of the case 111 by being coupled to the cap plate 112 by welding or the like.

The terminal 114 of the battery cell 110 may be electrically connected to an electrode assembly accommodated inside the battery cell 110. In some embodiments, the terminal 114 of the battery cell 110 may be electrically connected to either a negative electrode or a positive electrode of an electrode assembly accommodated inside the battery cell 110.

The terminal 114 of the battery cell 110 may electrically connect the electrode assembly with external components. For example, the terminal 114 of the battery cell 110 may be connected to the bus bar unit 300 and the holder part 400, which will be described later, and may be connected to the terminal 114 of another battery cell 110 or to another battery module 10.

Referring to FIGS. 3, 5, and 6, the bus bar holder 200 may provide a space in which the bus bar unit 300 is arranged such that the bus bar unit 300 described below may be stably connected to the terminal 114 of the battery cell 110.

The bus bar holder 200 is arranged on an upper surface of the battery group 100 and may provide a space in which the bus bar unit 300 may be arranged to be connected to the terminal 114 of the battery cell 110, thereby allowing a stable connection between the bus bar unit 300 and the terminal 114 of the battery cell 110.

Referring to FIG. 3, the bus bar holder 200 may have a vent hole 201 formed in which a vent part 113 is connected to the outside. In some embodiments, the vent hole 201 may be formed in the bus bar holder 200 corresponding to a position where the vent part 113 of the battery cell 110 is arranged.

Accordingly, in a case in which the bus bar holder 200 is placed on the upper surface of the battery group 100, gas emitted from the vent part 113 due to an increase in the internal pressure of the battery cell 110 may escape to the outside without being obstructed by the bus bar holder 200.

Referring to FIG. 3, a terminal hole 202 through which a terminal 114 of the battery cell 110 may pass may be formed in the bus bar holder 200. In some embodiments, the terminal hole 202 through which the terminal 114 may pass may be formed in the bus bar holder 200 corresponding to a position where the terminal 114 of the battery cell 110 is located.

Accordingly, in a case in which the bus bar holder 200 is placed on an upper surface of the battery group 100, the terminal 114 of the battery cell 110 may be exposed to the outside without being covered by the bus bar holder 200.

Referring to FIG. 3 and FIG. 5, the bus bar unit 300 may be mounted on the bus bar holder 200. The bus bar holder 200 may provide a mounting space for the bus bar unit 300.

In some embodiments, the bus bar holder 200 may provide a space in which the bus bar unit 300 is mounted on the bus bar holder 200 to cover the terminal hole 202. That is, the bus bar unit 300 may be connected to the terminal of the battery cell 110 exposed through the terminal hole 202 while being mounted on the bus bar holder 200.

Accordingly, the bus bar holder 200 may provide a space in which the bus bar unit 300 is electrically connected to the terminal 114 of the battery cell 110.

Referring to FIG. 5, a bus bar catching portion 203 may be formed to protrude in an area adjacent to the terminal holes 202 in the bus bar holder 200.

The bus bar catching portion 203 may press the bus bar unit 300 mounted on the bus bar holder 200 against the terminal 114 of the battery cell 110. That is, the bus bar catching portion 203 may strengthen a connection between the bus bar unit 300 and the terminal 114 of the battery cell 110.

Accordingly, the bus bar catching portion 203 may ensure or facilitate that the electrical connection between the bus bar unit 300 and the battery cell 110 is stably maintained.

A bus bar support 204 may support the bus bar unit 300 on the bus bar holder 200. For example, the bus bar support 204 may be formed to protrude from the bus bar holder 200 at a certain (e.g., preset) height, thereby supporting the bus bar unit 300 in a horizontal direction (e.g., a direction perpendicular to a z-axis).

Accordingly, the bus bar support 204 may ensure or facilitate that the electrical connection between the bus bar unit 300 and the terminal 114 of the battery cell 110 is stably maintained.

The bus bar support 204 may prevent or substantially prevent busbars of the bus bar unit 300 from being electrically connected to each other.

The bus bar support 204 may spatially separate a plurality of bus bar units 300 by protruding at a certain (e.g., preset) height between the bus bar units 300 mounted on the bus bar holder 200.

Accordingly, the bus bar support 204 may prevent or substantially prevent the bus bar units 300 from being connected to each other, thereby preventing or substantially preventing a short circuit within the battery module 10.

Referring to FIGS. 2, 3, 5, and 6, the bus bar unit 300 may electrically connect the plurality of battery cells 110 to each other and may include a cell connection bus bar 310 and a terminal connection bus bar 320.

The bus bar unit 300 may include a conductive material and may be electrically connected by coming into contact with the terminal 114 of the battery cell 110. That is, a side of the bus bar unit 300 may contact a terminal 114 of a battery cell 110 and another side thereof may contact a terminal of another battery cell 110 or a component connected to the outside, thereby electrically connecting respective components.

Referring to FIG. 5 and FIG. 6, the bus bar unit 300 may contact the plurality of battery cells 110 concurrently (e.g., simultaneously) to electrically connect the battery cells 110 to each other. For example, the bus bar unit 300 may be mounted on the bus bar holder 200 to cover a plurality of terminal holes 202 to electrically connect terminals 114 of different battery cells 110 to each other.

The bus bar unit 300 may be mounted on the bus bar holder 200 and may be stably connected to the terminal 114 of the battery cell 110.

In some embodiments, the bus bar unit 300 may be supported in a height direction (e.g., a z-axis direction) of the battery module 10 by the bus bar catching portion 203 of the bus bar holder 200 and may be supported in a horizontal direction (e.g., the direction perpendicular to the z-axis) by the bus bar support 204 to be stably connected to the terminal 114 of the battery cell 110 that is exposed to the outside through the terminal hole 202.

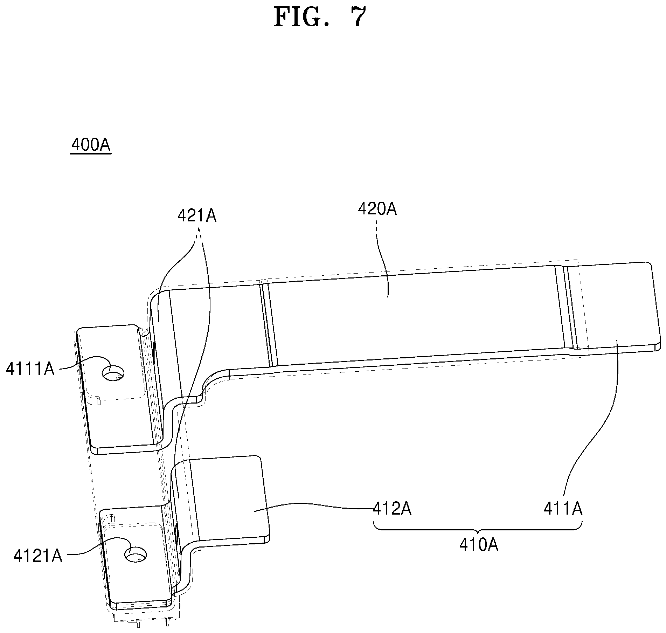

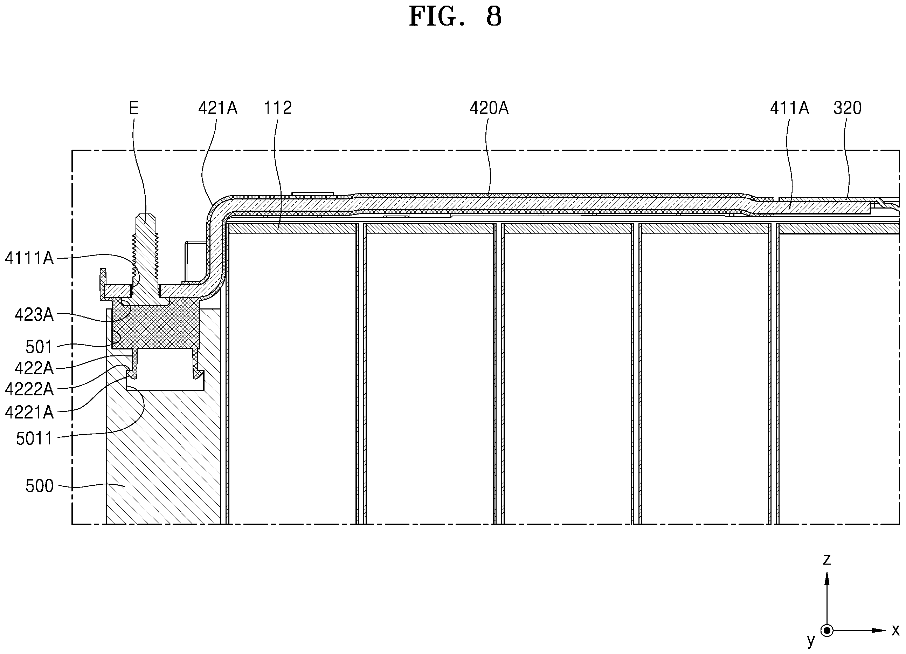

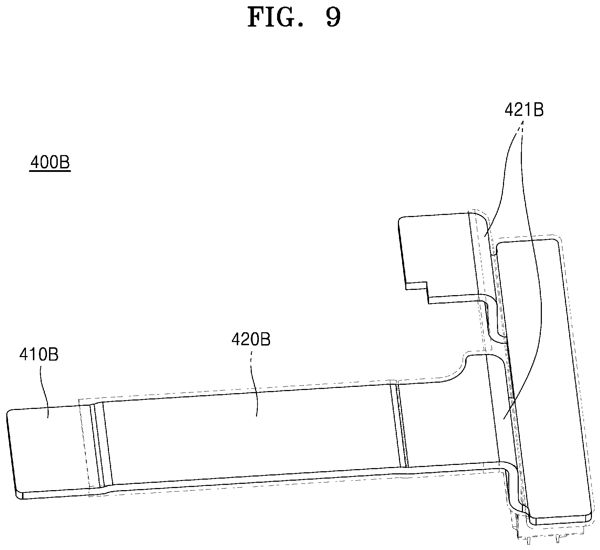

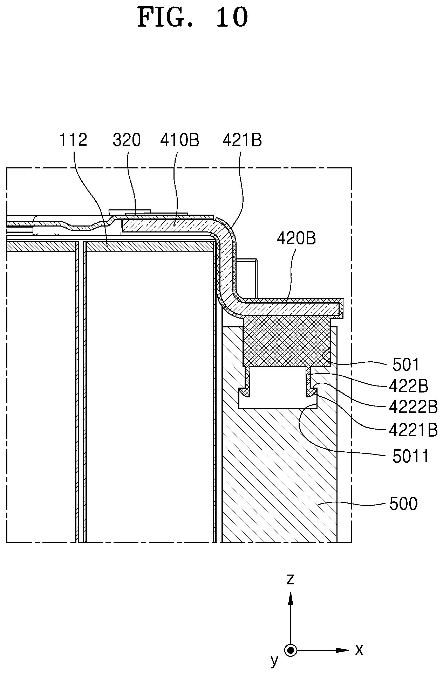

FIG. 7 is a view showing a first holder part 400A of FIG. 2; and FIG. 8 is an enlarged cross-sectional view of the first holder part 400A taken along the line I-I' of FIG. 2. In addition, FIG. 9 is a view showing a second holder part 400B of FIG. 2; and FIG. 10 is an enlarged cross-sectional view of the second holder part side taken along the line I-I' of FIG. 2.

Referring to FIG. 2, FIG. 3, and FIG. 5, the cell connection bus bar 310 may connect terminals 114 of the plurality of battery cells 110 to each other.

The cell connection bus bar 310 may be provided to connect terminals 114 arranged adjacent to each other on the bus bar holder 200, and may also be provided to connect terminals 114 spaced apart at intervals (e.g., preset intervals) on the bus bar holder 200. Without being limited thereto, the cell connection bus bar 310 may be provided in various shapes for connecting terminals 114 of different battery cells 110 as desired.

Referring to FIG. 2 and FIG. 6, the terminal connection bus bar 320 may connect the terminal 114 of the battery cell 110 with the holder part 400. In some embodiments, a side of the terminal connection bus bar 320 is disposed to cover at least one terminal hole 202, and another side of the terminal connection bus bar 320 is connected to the holder part 400, thereby electrically connecting the terminal of the battery cell 110 to the holder part 400.

The terminal connection bus bar 320 may form a space where the holder part 400 is connected. For example, a side of the terminal connection bus bar 320 may be bent to form a step, and a space may be formed between the terminal connection bus bar 320 and the bus bar holder 200.

The holder part 400 may be inserted into the space between the terminal connection bus bar 320 and the bus bar holder 200 and connected to the terminal connection bus bar 320. Accordingly, the terminal connection bus bar 320 may be stably connected to the holder part 400.

Referring to FIGS. 2, 3, 7 to 10, the holder part 400 has a side connected to the terminal 114 of the battery cell 110 and another side connected to the end plate 500, and may include the first holder part 400A and the second holder part 400B.

In an embodiment, a side of the holder part 400 may be connected to the terminals 114 of the battery cells 110 through the bus bar unit 300, and another side of the holder part 400 may be connected to the end plate 500 to form a mechanical coupling relationship between the battery group 100 and the end plate 500. Accordingly, the end plate 500 may press the battery group 100 to prevent or substantially prevent the battery cell 110 from expanding due to swelling.

The holder part 400 may be arranged to cover at least one battery cell 110. That is, the holder part 400 connects the end plate 500 with the terminal 114 of the battery cell 110, and may be arranged on an upper surface of the battery group 100 to cover at least one battery cell 110.

For example, the holder part 400 may be placed on the bus bar holder 200 disposed on the upper surface of the battery group 100 and cover at least one battery cell 110 by covering the bus bar holder 200. Accordingly, the holder part 400 may be stably placed within the battery module 10.

A bent side of the holder part 400 may cover a certain (e.g., preset) area of the battery cell 110 contacting the end plate 500. In some embodiments, the holder part 400 may be bent at a position corresponding to a corner of the battery cell 110 contacting the end plate 500, and may press the battery cell 110 contacting the end plate 500 in a direction (e.g., an x-axis direction) in which the battery cells 110 are arranged.

Accordingly, the holder part 400 may assist the end plate 500 in supporting the battery cells 110 in the direction in which the battery cells 110 are arranged.

A bent side of the holder part 400 may cover the corner area of the battery cell 110 that comes into contact with the end plate 500. The holder part 400 may cover a corner area of the battery cells 110 contacting the end plates 500 with the bent area of the holder part 400, thereby directly providing a supporting force to the cap plate 112 of the battery cell 110 contacting the end plate 500.

Accordingly, the holder part 400 may provide (e.g., directly provide) a supporting force to the cap plate 112 to prevent or substantially prevent rupture between the cap plate 112 and the case 111.

Referring to FIGS. 2, 3, 7, and 8, the holder part 400A according to an embodiment of the present disclosure may electrically connect the terminal 114 of the battery cell 110 to an external connection terminal E, and may include a first terminal body 410A and a first terminal housing 420A.

Referring to FIG. 2 and FIG. 3, the first terminal body 410A has a side connected to the terminal 114 of the battery cell 110 and another side connected to the external connection terminal E disposed on the end plate 500.

The first terminal body 410A may be electrically connected to the terminal 114 of the battery cell 110. For example, the first terminal body 410A may include a conductive material and may have a side connected to a terminal 114 of a battery cell 110 to receive electrical energy from the battery cell 110.

The first terminal body 410A may be mechanically connected to the terminal 114 of the battery cell 110. For example, the first terminal body 410A may be connected to the terminal 114 of the battery cell 110 by laser welding. However, embodiments are not limited thereto, and various other connection methods, such as ultrasonic welding or wave welding, may be used.

In an embodiment, the first terminal body 410A may be connected to the terminal 114 of the battery cell 110 through the bus bar unit 300. In some embodiments, the first terminal body 410A may be connected to the terminal 114 of the battery cell 110 by being connected to the terminal connection bus bar 320.

The first terminal body 410A may be mounted on the bus bar holder 200 and connected to the terminal connection bus bar 320 connected to the terminal 114 of the battery cell 110 and, thus, electrically connected to the terminal 114 of the battery cell 110 connected to the terminal connection bus bar 320.

For convenience of explanation, the following description will focus on an embodiment in which the first terminal body 410A is connected to the battery cell 110 through the terminal connection bus bar 320.

Referring to FIG. 3 and FIG. 7, according to an embodiment of the disclosure, the first terminal body 410A may have a side connected to the terminal 114 of the battery cell 110 and another side connected to the external connection terminal E arranged on the end plate 500, and may include a first-a terminal body 411A and a first-b terminal body 412A.

A side of the first-a terminal body 411A may be connected to the terminal 114 of the battery cell 110. In some embodiments, the first-a terminal body 411A may be connected to the terminal connection bus bar 320 having a side connected to the terminal 114 of the battery cell 110, and may be electrically connected to the terminal 114 of the battery cell.

The first-a terminal body 411A may have another end connected to the external connection terminal E disposed on the end plate 500. For example, a first-a external connection terminal hole 4111A through which the external connection terminal E may pass may be formed in the first-a terminal body 411A to allow the external connection terminal E passing through the first-a external connection terminal hole 4111A to be connected.

Accordingly, the external connection terminal E may be supported by the first-a terminal body 411A, thereby allowing a stable electrical connection between the external connection terminal E and the first-a terminal body 411A.

In an embodiment, the first-a external connection terminal hole 4111A formed in the first-a terminal body 411A may be formed in a shape corresponding to a cross-section of the external connection terminal E. That is, in a case in which the external connection terminal E passes through the first-a external connection terminal hole 4111A, the inner peripheral surface of the first-a external connection terminal hole 4111A and the external connection terminal E may come into contact with each other and be electrically connected.

Referring to FIG. 2 and FIG. 8, the first-a terminal body 411A may cover at least one battery cell 110. For example, the first-a terminal body 411A may have a side connected to the terminal 114 of the battery cell 110 and another side connected to the external connection terminal E, the first-a terminal body 411A covering an upper surface of at least one of the battery cells 110 between the side and the another side.

For example, the first-a terminal body 411A may cover the battery cell 110 by covering the bus bar holder 200 arranged on the upper surface of the battery cell 110. Accordingly, the first-a terminal body 411A may be stably placed within the battery module 10 by being supported by the battery cell 110 and the bus bar holder 200.

The first-a terminal body 411A may be accommodated in the first terminal housing 420A. The first-a terminal body 411A may be accommodated in a hollow space formed in the first terminal housing 420A, such that an area (e.g., a preset area) thereof may be covered by the first terminal housing 420A.

Referring to FIG. 3 and FIG. 7, the first-a terminal body 411A is accommodated in the first terminal housing 420A, and an end portion of the first-a terminal body 411A may be exposed to the outside. In an embodiment, for example, the first-a terminal body 411A has opposite ends exposed to the outside, such that an end of the first-a terminal body 411A may be connected to the terminal connection bus bar 320 and another end of the first-a terminal body 411A may be connected to the external connection terminal E.

That is, the first-a terminal body 411A may be accommodated in the first terminal housing 420A such that opposite ends of the first-a terminal body 411A are exposed to the outside, thereby electrically connecting the terminal 114 of the battery cell 110 connected to the terminal connection bus bar 320 with the external connection terminal E.

Referring to FIG. 8, the first-a terminal body 411A may have a bent side to cover a certain area (e.g., a preset area) of the battery cell 110 that comes into contact with the end plate 500.

In some embodiments, the first-a terminal body 411A may be bent at a position corresponding to the corner of the battery cell 110 that is in contact with the end plate 500, such that the battery cell 110 that is in contact with the end plate 500 may be pressed in the direction (e.g., the x-axis direction) in which the battery cells 110 are arranged.

Accordingly, the first-a terminal body 411A may assist the end plate 500 in supporting the battery cells 110 in the direction in which the battery cells 110 are arranged (e.g., the x-axis direction).

The first-a terminal body 411A may be connected to the end plate 500. The first-a terminal body 411A and the end plate 500 may be connected to each other, for example, by welding or a bolt-nut connection. Accordingly, the first-a terminal body 411A may fix a relative position of the end plate 500 with respect to the battery group 100.

In an embodiment, the first-a terminal body 411A may be connected to the end plate 500 by having the first terminal housing 420A coupled to the end plate 500 while the first-a terminal body 411A is accommodated in the first terminal housing 420A to be described later. That is, while being connected to the terminal connection bus bar 320, the first-a terminal body 411A may be accommodated inside the first terminal housing 420A coupled to the end plate 500, thereby fixing a position of the end plate 500 relative to the battery group 100.

For convenience of explanation, the coupling relationship between the first-a terminal body 411A and the end plate 500 will be described below with a focus on an embodiment in which the first-a terminal body 411A is accommodated inside the first terminal housing 420A coupled with the end plate 500.

Referring to FIG. 3 and FIG. 7, the first-b terminal body 412A may have a shape and function corresponding to the first-a terminal body 411A.

For example, the first-b terminal body 412A may include a conductive material, and may have an end connected to the terminal 114 of the battery cell 110 and another end connected to the external connection terminal E, to electrically connect the battery cell 110 and the external connection terminal E.

In addition, the first-b terminal body 412A covers at least one battery cell 110, and may be bent at a side thereof to press the battery cell 110 that contacts the end plate 500 in the direction (e.g., the x-axis direction) in which the battery cells 110 are arranged.

A first-b external connection terminal hole 4121A may be formed in the first-b terminal body 412A, through which the external connection terminal E may pass and be electrically connected to the first-b terminal body 412A.

A shape and function of the first-b terminal body 412A may correspond to the first-a terminal body 411A. Accordingly, a further detailed description of the first-b terminal body 412A is omitted.

The first-a terminal body 411A and the first-b terminal body 412A may be connected to the terminal 114 of each battery cell 110, and may electrically connect the battery group 100 to an external configuration. For example, the first-a terminal body 411A and the first-b terminal body 412A may be connected to terminals 114 corresponding to a cathode and an anode of the battery group 100, respectively, to form an electrical closed circuit including an external configuration and the battery group 100.

In FIG. 2, FIG. 3, and FIG. 7, the first-a terminal body 411A is illustrated as having a longer shape than the first-b terminal body 412A, but embodiments of the present disclosure are not limited thereto, and a length relationship between the first-a terminal body 411A and the first-b terminal body 412A may be variously set depending on a design of the battery module 10. For example, the first-a terminal body 411A may have a shorter shape than the first-b terminal body 412A, or the first-a terminal body 411A and the first-b terminal body 412A may have a shape with a same length.

Referring to FIG. 3, FIG. 7, and FIG. 8, the first terminal housing 420A may have a hollow interior space and may accommodate the first terminal body 410A. In some embodiments, a hollow space corresponding to a cross-section of the first terminal body 410A is formed in the first terminal housing 420A, such that the first terminal body 410A may be stably accommodated inside the first terminal housing 420A.

In an embodiment, two hollow spaces may be formed in the first terminal housing 420A, and the first-a terminal body 411A and the first-b terminal body 412A may be accommodated in the two hollow spaces, respectively. The two hollow spaces formed in the first terminal housing 420A may be respectively formed in shapes corresponding to cross-sections of the first-a terminal body 411A and the first-b terminal body 412A, such that the first-a terminal body 411A and the first-b terminal body 412A may be stably supported without shaking inside the first terminal housing 420A.

The first terminal housing 420A may cover a certain area (e.g., a preset area) of the first terminal body 410A. The first terminal housing 420A may cover the certain area (e.g., a preset area) of the first terminal body 410A by accommodating the first terminal body 410A in the formed hollow space, and may isolate the certain area (e.g., a preset area) of the first terminal body 410A from the outside.

The first terminal housing 420A may include an insulating material. That is, the first terminal housing 420A may cover the certain area (e.g., a preset area) of the first terminal body 410A to prevent or substantially prevent the first terminal body 410A from being electrically connected to other components other than the terminal connection bus bar 320 and the external connection terminal E. Accordingly, the first terminal housing 420A may prevent or substantially prevent a short circuit from occurring within the battery module 10.

Referring to FIG. 8, the first terminal housing 420A may be bent at a side thereof to cover a certain area (e.g., a preset area) of the battery cell 110 contacting the end plate 500. In some embodiments, the first terminal housing 420A may be bent at a position corresponding to the corner of the battery cell 110 that is in contact with the end plate 500, to press the battery cell 110 that is in contact with the end plate 500 in the direction in which the battery cells 110 are arranged (e.g., the x-axis direction). Accordingly, the end plate 500 may assist in supporting the battery cell 110 in the direction in which the battery cells 110 are arranged.

Referring to FIG. 7 and FIG. 8, the first terminal housing 420A may include a first bent portion 421A which is formed by bending the first terminal housing 420A at a position corresponding to a corner of the battery cells 110 contacting the end plate 500. The first terminal housing 420A may include a first bent portion 421A formed at a position in which the first terminal body 410A is bent.

The first terminal housing 420A may cover the corner area of the battery cell 110 that comes into contact with the end plate 500. That is, the first terminal housing 420A may cover the corner area of the battery cell 110 that comes into contact with the end plate 500 through the first bent portion 421A.

The first terminal housing 420A may provide (e.g., directly provide) a supporting force to the cap plate 112 by supporting the corner area of the battery cell 110. Accordingly, the first terminal housing 420A may prevent or substantially prevent rupture between the cap plate 112 and the case 111.

Referring to FIG. 8, the first terminal housing 420A may be coupled with the end plate 500. For example, the first terminal housing 420A may be coupled to the end plate 500 by being inserted into a locking groove 501 formed in the end plate 500.

In an embodiment, a first locking protrusion 422A capable of being, or configured to be, caught by and coupling to the locking groove 501 may be formed protruding on the first terminal housing 420A insertable into the end plate 500. The first locking protrusion 422A supports the first terminal housing 420A against the end plate 500 and may have a first locking surface 4222A and a first inclined surface 4221A.

The first inclined surface 4221A may be formed to be inclined toward the center of the locking groove 501 such that the first locking protrusion 422A may bend toward the inside of the locking groove 501 in a case in which the first terminal housing 420A is inserted into the locking groove 501 of the end plate 500.

That is, the first inclined surface 4221A may receive a force from the inner peripheral surface of the locking groove 501 to cause the first locking protrusion 422A to elastically deform toward the inside of the locking groove 501.

The first locking surface 4222A may come into contact with a locking groove step portion 5011 having a certain (e.g., preset) depth step at the bottom of the locking groove 501 in a case in which the first terminal housing 420A is fully inserted into the locking groove 501.

In some embodiments, in a case in which the first terminal housing 420A is fully inserted into the locking groove 501, the first locking surface 4222A may come into contact with the inner peripheral surface of the locking groove step portion 5011 due to an elastic force of the first locking protrusion 422A. Thus, the first locking surface 4222A may be supported by the locking groove step portion 5011, such that the first locking protrusion 422A may be supported by the locking groove 501.

In an embodiment, the first terminal housing 420A may have a plurality of first locking protrusion 422A. For example, the first terminal housing 420A may include a plurality of first locking protrusions 422A formed to face each other, such that in a case in which the first terminal housing 420A is inserted into the locking groove 501, the plurality of first locking protrusions 422A may be elastically deformed toward each other and provide an elastic force to each other, thereby allowing the first locking surface 4222A to come into contact with the locking groove step portion 5011.

Referring to FIG. 7 and FIG. 8, the first terminal housing 420A may provide a space in which the external connection terminal E may be arranged. In some embodiments, a seating groove 423A may be formed on a side of the first terminal housing 420A in a shape of a groove in which the external connection terminal E may be mounted.

The seating groove 423A formed in the first terminal housing 420A may be formed in a shape corresponding to a cross-section of the external connection terminal E, such that in a case in which the external connection terminal E is arranged in the seating groove 423A, the external connection terminal E may be stably supported.

FIG. 2, FIG. 3, and FIG. 7 illustrate the holder part 400A according to an embodiment of the present disclosure including the pair of the first-a terminal body 411A and the first-b terminal body 412B and the first terminal housing 420A accommodating the same; however, a shape of the holder part 400A is not limited thereto.

For example, although not shown in the view, in another embodiment of the disclosure, the holder part 400A may include a single first terminal body and a first terminal housing that accommodates the first terminal body.

The external connection terminal E may be electrically connected to the first terminal body 410A and may electrically connect the battery cell 110 to an external component.

The external connection terminal E may be mounted on the first terminal housing 420A and may be stably supported. For example, while the external connection terminal E is disposed in the seating groove 423A, a side thereof may pass through the first-a external connection terminal hole 4111A and the first-b external connection terminal hole 4121A, and another side thereof disposed in the seating groove 423A may be covered by the first terminal body 410A to be supported in a direction (e.g., a -z-axis direction) toward the end plate 500.

In an embodiment, external threads may be formed on an outer circumferential surface of the external connection terminal E to facilitate connection with external components. However, embodiments of the present disclosure are not limited thereto, and the external connection terminal may have any of various shapes to facilitate connection with external components.

Referring to FIGS. 2, 3, 9, and 10, a second holder part 400B according to an embodiment of the present disclosure connects each terminal 114 of different battery cells 110, and may include a second terminal body 410B and a second terminal housing 420B.

The second holder part 400B may only be different in some shape and function from the first holder part 400A described above, and any parts of the shape and function of the second holder part 400B that overlap with those of the holder part 400A may be omitted or briefly described.

Referring to FIG. 9 and FIG. 10, the second terminal body 410B may electrically connect terminals 114 of different battery cells 110. For example, the second terminal body 410B may include a conductive material and may be connected to terminals 114 of different battery cells 110 at opposite ends to electrically connect each terminal 114.

The second terminal body 410B may have a side connected to the terminal 114 of the battery cell 110 and another side connected to the end plate 500.

For example, the second terminal body 410B may be connected to the terminal 114 of the battery cell 110 by being connected to the terminal connection bus bar 320 which is connected to the terminal 114 of the battery cell 110 at an end, and may be connected to the end plate 500 by being accommodated in the second terminal housing 420B which is coupled to the end plate 500 at another end.

The second terminal body 410B may cover a certain area (e.g., a preset area) of the battery cell 110 that is bent on a side and comes into contact with the end plate 500. In an embodiment, the second terminal body 410B is bent at a position corresponding to the corner of the battery cell 110 that is in contact with the end plate, to press the battery cell 110 that is in contact with the end plate 500 in the direction in which the battery cells 110 are arranged, thereby assisting the end plate 500 in pressing the battery cell 110.

The second terminal housing 420B may have a hollow interior space and may accommodate the second terminal body 410B. In some embodiments, a hollow space corresponding to a cross-section of the second terminal body 410B may be formed in the second terminal housing 420B, such that the second terminal body 410B may be accommodated in the hollow space of the second terminal housing 420B and supported without shaking.

The second terminal housing 420B may include an insulating material and may cover a certain area (e.g., a preset area) of the second terminal body 410B. That is, the second terminal housing 420B may electrically isolate the second terminal body 410B from the outside, thereby preventing or substantially preventing a short circuit from occurring within the battery module 10.

Referring to FIG. 9 and FIG. 10, the second terminal housing 420B may include a second bent portion 421B formed by being bent at a position corresponding to a corner of the battery cell 110 contacting the end plate 500.

The second terminal housing 420B may provide (e.g., directly provide) a supporting force to the cap plate 112 by covering the corner area of the battery cell 110 that comes into contact with the end plate 500 through the second bent portion 421B. Accordingly, the second terminal housing 420B may provide (e.g., directly provide) a supporting force to the cap plate 112 to prevent or substantially prevent rupture between the cap plate 112 and the case 111.

Referring to FIG. 10, the second terminal housing 420B may be coupled with the end plate 500. In some embodiments, a second locking protrusion 422B that may be insertable into the locking groove 501 of the end plate 500 may be formed protruding in the second terminal housing 420B, such that the second terminal housing 420B may be caught by and coupled to the end plate 500.

In an embodiment, the second locking protrusion 422B may have a second inclined surface 4221B and a second locking surface 4222B. The second inclined surface 4221B may receive a force from an inner peripheral surface of the locking groove 501 such that the second locking protrusion 422B bends in a case in which the second terminal housing 420B is inserted into the locking groove 501 of the end plate 500.

The second locking surface 4222B may support the second terminal housing 420B against the end plate 500 by contacting the locking groove step portion 5011 in a case in which the second terminal housing 420B is fully inserted into the end plate 500.

Referring to FIG. 1 and FIG. 2, the battery module 10 according to an embodiment of the present disclosure may include a pair of holder parts 400 arranged facing each other on opposite sides along the direction in which the plurality of battery cells 110 are arranged.

In some embodiments, the battery module 10 may include the first holder part 400A connecting the terminal 114 of the battery cell 110 to the end plate 500 at an end of the battery group 100, and may include the second holder part 400B connecting the terminal 114 of the battery cell 110 to the end plate 500 at another end of the battery cell 110 facing the first holder part 400A.

Accordingly, the holder part 400 may suppress expansion of a battery due to swelling, etc. by supporting the end plates 500 pressing the battery group 100 at opposite ends of the battery group 100 or directly supporting the battery cells 110 at opposite ends of the battery group 100.

Referring to FIGS. 2, 3, 8, and 10, end plates 500 may be respectively placed on opposite sides of the battery group 100 in the direction in which the battery cells 110 are arranged.

The end plates 500 provided in a pair may be respectively arranged on opposite sides of the battery group 100 to absorb pressure caused by expansion in a case in which swelling occurs in the battery cell 110 according to a charging and discharging operation of the battery cell 110. Accordingly, the end plate 500 may prevent or substantially prevent performance degradation of the battery cell 110 and improve the structural stability of the battery module 10.

Referring to FIG. 8 and FIG. 10, the end plate 500 may be coupled to the holder part 400. For example, the locking groove 501 having a depth (e.g., a preset depth) to allow the holder part 400 to be inserted and caught by and couple to may be formed in the end plate 500 such that the end plate 500 is coupled to the holder part 400.

The locking groove 501 formed in the end plate 500 may provide a space into which the first terminal housing 420A and the second terminal housing 420B may be inserted. The locking groove 501 may be formed in a shape corresponding to cross-sections of the first terminal housing 420A and the second terminal housing 420B, such that in a case in which the first terminal housing 420A and the second terminal housing 420B are inserted into the locking groove 501, the first terminal housing 420A and the second terminal housing 420B may be supported by the inner peripheral surface of the locking groove 501.

The locking groove step portion 5011 may be formed on the inner side of the locking groove 501 formed in the end plate 500. In an embodiment, the locking groove step portion 5011 having a step of a certain (e.g., preset) depth may be formed at a lower portion of the locking groove 501. The locking groove step portion 5011 may be in contact with the first locking protrusion 422A and the second locking protrusion 422B such that the first terminal housing 420A and the second terminal housing 420B may be supported in the direction of the end plate 500 (e.g., the -z-axis direction).

Referring to FIGS. 2 and 3, the pair of end plates 500 may be connected to each other by the side plate 600.

For example, the respective end plates 500 may be connected to a pair of side plates 600 covering the side surfaces of the battery cells 110 by welding or the like, and, thus, the end plates 500 may be connected to each other.

Referring to FIG. 2 and FIG. 3, the side plate 600 may cover a side of the battery cells 110 and may be connected to the pair of end plates 500. The side plate 600 may support the battery cell 110 laterally (e.g., in a y-axis direction) to improve the structural stability of the battery module 10.

Herein, a configuration, operating principle, and effect of the battery module 10 and the battery pack 1 including the same according to an embodiment of the present disclosure will be described.

Referring to FIG. 1, the battery pack 1 may include the battery module 10 and the battery pack housing 20. The battery module 10 may transmit electrical energy stored in each of the battery cells 110 to an electrically connected external source, and the battery pack housing 20 may accommodate a plurality of battery modules 10.

Referring to FIG. 2 and FIG. 3, the battery module 10 may include the battery group 100, the bus bar holder 200, the bus bar unit 300, the end plate 500, and the side plate 600.

Referring to FIG. 3, the battery group 100 may be formed by arranging a plurality of battery cells 110. For example, the plurality of battery cells 110 may be arranged to be connected to each other in the thickness direction to improve energy density.

The plurality of battery cells 110 may each include the terminal 114 and may transmit electrical energy to the outside. The cell connection bus bar 310 of the bus bar unit 300 may connect terminals 114 of different battery cells 110 to each other. The terminal connection bus bar 320 of the bus bar unit 300 may connect the terminal of the battery cell 110 and the external connection terminal E to transmit the energy of the battery cell 110 to the outside.

Referring to FIGS. 3, 5, and 6, the bus bar holder 200 may provide a space in which the bus bar unit 300 is mounted to be electrically connected to the terminal 114 of the battery cell 110. For example, the terminal hole 202 may be formed in the bus bar holder 200 such that the terminal 114 of the battery cell 110 may pass therethrough and be exposed to the outside, and the bus bar unit 300 may be arranged to cover the terminal hole 202, such that the bus bar unit 300 and the terminal 114 of the battery cell 110 may be connected to each other.

Referring to FIG. 5 and FIG. 6, the bus bar holder 200 may have a support structure capable of supporting the bus bar unit 300. For example, the bus bar holder 200 may have a bus bar catching portion 203 to support the bus bar unit 300 against the terminal 114 of the battery cell 110.

In some embodiments, the bus bar holder 200 may include the bus bar support 204 to support the bus bar unit 300 in a horizontal direction and to separate the space such that different bus bar units 300 do not come into contact with each other.

Referring to FIGS. 7 to 10, the holder part 400 may connect the terminal 114 of the battery cell 110 to the end plate 500 such that the end plate 500 may prevent or substantially prevent the battery group 100 from expanding due to swelling of the battery cell 110.

The holder part 400 may include the holder part 400A and the second holder part 400B which are respectively arranged on opposite sides of the battery group 100 in the direction in which the battery cells 110 are arranged, thereby pressing the battery group 100 in the direction in which the battery cells 110 are arranged, thereby preventing or substantially preventing expansion of the battery group 100 due to swelling.

Referring to FIG. 7 and FIG. 8, the holder part 400A may electrically connect the terminal 114 of the battery cell 110 to the external connection terminal E, and the holder part 400A may have a side connected to the terminal 114 of the battery cell 110 and another side connected to the end plate 500.

For example, the first holder part 400A may have a side connected to the terminal connection bus bar 320 connected to the terminal 114 of the battery cell 110 and another side accommodated in the first terminal housing 420A coupled to the end plate 500 and thus connected to the end plate 500.

The first terminal body 410A of the first holder part 400A may be accommodated in a hollow space formed in the first terminal housing 420A, and the first terminal housing 420A may be inserted into, and caught by and coupled to the locking groove 501 formed in the end plate 500.

The first holder part 400A may be bent at a position corresponding to the corner of the battery cell 110 adjacent to the end plate 500, support a certain area (e.g., a preset area) of the battery cell 110, and may provide (e.g., directly provide) a supporting force to the cap plate 112.

Accordingly, the first holder part 400A may connect the terminal 114 of the battery cell 110 to the end plate 500 such that the end plate 500 may press the battery cell 110 in the direction in which the battery cells 110 are arranged, and may provide a supporting force to the cap plate 112 to prevent or substantially prevent rupture between the cap plate 112 and the case 111.

Referring to FIG. 9 and FIG. 10, the second holder part 400B electrically connects terminals 114 of different battery cells 110 to each other, the second holder part 400B having a side connected to the terminal 114 of the battery cell 110 and another side connected to the end plate 500.

For example, the second holder part 400B may have a side connected to the terminal connection bus bar 320 connected to the terminal 114 of the battery cell 110 and another side accommodated in the second terminal housing 420B coupled to the end plate 500 and thus connected to the end plate 500.

The second terminal body 410B of the second holder part 400B may be accommodated in the hollow space formed in the second terminal housing 420B, and the second terminal housing 420B may be inserted into and caught by and coupled to the locking groove 501 formed in the end plate 500.

The second holder part 400B may be bent at a position corresponding to the corner of the battery cell 110 adjacent to the end plate 500, support a certain area (e.g., a preset area) of the battery cell 110, and may provide (e.g., directly provide) a supporting force to the cap plate 112.

Accordingly, the second holder part 400B may connect the terminal 114 of the battery cell 110 to the end plate 500 such that the end plate 500 may press the battery cell 110 in the direction in which the battery cells 110 are arranged, and may provide a supporting force to the cap plate 112 to prevent or substantially prevent rupture between the cap plate 112 and the case 111.

The battery module 10 and the battery pack 1 including the same according to one or more embodiments of the present disclosure may suppress expansion of the battery cells 110 by pressing the battery group 100 in the direction in which the battery cells 110 are arranged by using a pair of holder parts 400 respectively arranged on opposite sides of the battery group 100. Accordingly, rupture of the case 111 and the cap plate 112 of each of the battery cells 110 due to repeated expansion of the battery cell 110 may be prevented or substantially prevented.

Regarding a battery module and a battery pack including the same according to one or more embodiments of the present disclosure, a plurality of arranged battery cells are pressed to prevent or substantially prevent expansion, such that rupture in the structure of the battery cells can be prevented or substantially prevented.

However, aspects and effects obtainable through the present disclosure are not limited to the aspects and effects described above, and other technical aspects and effects not described will be clearly understood by those skilled in the art from the description of the disclosure.

The spirit of the present disclosure is not to be limited to the described embodiments, and not only the scope of the claims, but also all scopes equivalent to or equivalently modified from the scope of the claims are included in the scope of the spirit of the present disclosure.

## Claims

1. A battery module (10) comprising:
a battery group (100) in which a plurality of battery cells (110) is arranged;
a bus bar unit (300) to electrically connect battery cells (110) of the plurality of battery cells (110) to each other;
a pair of end plates (500) respectively arranged at opposite sides of the battery group (100) in a direction in which the battery cells (110) are arranged; and
a holder comprising a side connected to a terminal (114) of each of the battery cells (110) and another side connected to the end plate (500),
wherein the holder covers at least one of the battery cells (110), has a first side bent, and covers an area of a battery cell (110) of the plurality of battery cells (110) that comes into contact with the end plate (500).

2. The battery module (10) as claimed in claim 1, wherein the holder comprises:
a terminal body (410A, 410B) comprising a conductive material and having a side connected to the terminal (114) of each of the battery cells (110); and
a terminal housing (420A, 420B) which has a hollow interior space, is configured to accommodate the terminal body (410A, 410B), and has a side coupled to the end plate (500).

3. The battery module (10) as claimed in claim 2, wherein the terminal housing (420A, 420B) comprises a seating groove (423A) having a shape of a recess such that an external connection terminal is seatable therein.

4. The battery module (10) as claimed in claim 2 or 3, further comprising
a locking groove (501) having a depth on an inner peripheral surface of the end plate (500); and
a locking protrusion configured to be caught by and coupled to the locking groove (501) and protruding on a side of the terminal housing (420A, 420B) which is insertable in the end plate (500).

5. The battery module (10) as claimed in any one of claims 2 to 4, wherein the terminal body (410A, 410B) comprises the side connected to the terminal (114) of each of the battery cells (110) and another side connected to an external connection terminal arranged on the end plate (500).

6. The battery module (10) as claimed in any one of claims 2 to 5, wherein the terminal body (410A, 410B) connects respective terminals (114) of different battery cells (110) to each other.

7. The battery module (10) as claimed in any one of claims 1 to 6, wherein
the holder comprises a pair of holders, and
the pair of holders are respectively arranged facing each other at opposite sides along the direction in which the battery cells (110) are arranged.

8. The battery module (10) as claimed in any one of claims 1 to 7, wherein the holder is connected to the terminal (114) of each of the battery cells (110) through the bus bar unit (300).

9. The battery module (10) as claimed in any one of claims 1 to 8, further comprising
a bus bar holder (200) which covers an upper portion of the battery group (100) and has a terminal hole (202) through which the terminal (114) of each of the battery cells (110) passes,
wherein the bus bar unit (300) is coupled to the bus bar holder (200) and comes into contact with the plurality of battery cells (110).

10. The battery module (10) as claimed in any one of claims 1 to 9, wherein the first side of the holder which is bent covers a corner area of the battery cell (110) that comes into contact with the end plate (500).

11. A battery pack (1) comprising:
a plurality of battery modules (10); and
a battery pack housing (20) which accommodates the plurality of battery modules (10) therein,
wherein a battery module (10) of the plurality of battery modules (10) comprises:
a battery group (100) in which a plurality of battery cells (110) is arranged;
a bus bar unit (300) electrically connecting battery cells (110) of the plurality of battery cells (110);
a pair of end plates (500) respectively arranged at opposite sides of the battery group (100) in a direction in which the battery cells (110) are arranged; and
a holder comprising a side connected to a terminal (114) of each of the battery cells (110) and another side connected to the end plate (500), wherein
the holder covers at least one of the battery cells (110), has a first side bent, and covers an area where the end plate (500) and the battery cell (110) come into contact with each other.

12. The battery pack (1) as claimed in claim 11, wherein the holder comprises:
a terminal body (410A, 410B) comprising a conductive material and having a side connected to the terminal (114) of each of the battery cells (110); and
a terminal housing (420A, 420B) which has a hollow interior space, is configured to accommodate the terminal body (410A, 410B), and has a side coupled to the end plate (500).

13. The battery pack (1) as claimed in claim 12, wherein the terminal housing (420A, 420B) comprises a seating groove (423A) having a shape of a recess such that an external connection terminal is seatable therein.

14. The battery pack (1) as claimed in claim 12 or 13, wherein the battery module (10) further comprises:
a locking groove (501) having a depth on an inner peripheral surface of the end plate (500); and
a locking protrusion configured to be caught by and coupled to the locking groove (501) and protruding on a side of the terminal housing (420A, 420B) which is insertable in the end plate (500).

15. The battery pack (1) as claimed in any one of claims 12 to 14, wherein the terminal body (410A, 410B) comprises the side connected to the terminal (114) of each of the battery cells (110) and another side connected to an external connection terminal arranged on the end plate (500).
